# EUROPÄISCHE PATENTSCHRIFT

(11) **EP 3 387 375 B1**
(45) Veröffentlichungstag und Bekanntmachung des Hinweises auf die Patenterteilung: **02.10.2019**
(21) Anmeldenummer: 16816598.3
(22) Anmeldetag: 07.12.2016
(51) Int. Cl.: G01C 11/08, G06T 7/593

(54) **VERFAHREN ZUR ERSTELLUNG EINER TIEFENKARTE**
METHOD FOR PRODUCING A DEPTH MAP
PROCÉDÉ D'ÉLABORATION D'UNE CARTE DE PROFONDEUR

(30) Priorität: 10.12.2015 DE 102015224854
(43) Veröffentlichungstag der Anmeldung: 17.10.2018
(73) Patentinhaber: Siemens Aktiengesellschaft, 80333 München (DE)
(72) Erfinder: BIRCHBAUER, Josef, Alois, 8054 Seiersberg (AT); WAKOLBINGER, Stefan, 8010 Graz (AT)
(86) Internationale Anmeldenummer: PCT/EP2016/080055
(87) Internationale Veröffentlichungsnummer: WO 2017/097827

(56) Entgegenhaltungen:
- US-A- 5 606 627
- US-A1- 2003 235 344
- Yihui Lu ET AL: "STEREO IMAGE MATCHING USING ROBUST ESTIMATION AND IMAGE ANALYSIS TECHNIQUES FOR DEM GENERATION", , 1. Januar 2000 (2000-01-01), XP055312468, Gefunden im Internet: URL:http://www.isprs.org/proceedings/XXXII I/congress/part3/520_XXXIII-part3.pdf [gefunden am 2016-10-20]
- DAVID GALLUP ET AL: "Real-Time Plane-Sweeping Stereo with Multiple Sweeping Directions", COMPUTER VISION AND PATTERN RECOGNITION, 2007. CVPR '07. IEEE CONFERENCE ON, 1 June 2007 (2007-06-01), pages 1-8, XP055565861, DOI: 10.1109/CVPR.2007.383245 ISBN: 978-1-4244-1180-1

## Beschreibung

### Gebiet der Erfindung

Die vorliegende Erfindung betrifft ein Verfahren zur Erstellung einer Tiefenkarte von einem Erfassungsbereich der Erdoberfläche, in welchem Erfassungsbereich eine Unterflurrohrleitung angeordnet ist, mit den folgenden Verfahrensschritten:
- Aufnahme zumindest einer Bildsequenz mittels zumindest einer Kamera, wobei die Bildsequenz mehrere zumindest teilweise überlappende Einzelaufnahmen des Erfassungsbereiches umfasst;
- Bestimmung der zu jeder Einzelaufnahme korrespondierenden Position und Orientierung der Kamera.

### Stand der Technik

Unterirdisch verlegte Gas- und Öl-Pipelines müssen von Erdreich mit einer gesetzlich vorgegebenen Mindestschichtdicke bedeckt sein. Die Einhaltung dieser Schichtdicke muss in regelmäßigen zeitlichen Abständen vom Leitungsbetreiber überprüft werden. Dabei muss die Mindestschichtdicke üblicherweise mit einer Genauigkeit im einstelligen Zentimeterbereich bestimmt werden.

Im Vergleich zu den derzeit üblichen, jedoch sehr kostenintensiven Helikopter-Inspektionen gewinnt in diesem Zusammenhang der Einsatz sogenannter UAVs (Unmanned Aerial Vehicles), welche mit Kameratechnik ausgestattet sind, zunehmend an Bedeutung. Dabei reicht das Spektrum des Einsatzes dieser Flugdrohnen von der Veränderungserkennung des Erdreiches bis hin zur Detektion von Leckagen. Im Rahmen der Befliegung kann dabei aus überlappenden Luftaufnahmen eines zu überwachenden Erfassungsbereiches der Erdoberfläche entweder ein DOM (Digitales Oberflächenmodell, engl. Digital Surface Model) oder ein DGM (Digitales Geländemodell, engl. Digital Terrain Model) erstellt werden. Während ein DOM eine Repräsentation der Erdoberfläche (Grenzschicht Pedosphäre - Atmosphäre) samt allen darauf befindlichen Objekten (Bebauung, Straßen, Bewuchs, usw.) darstellt, beziehen sich die Höheninformationen eines DGMs auf die Erdoberfläche selbst. Daher stellt ein DGM eine optimale Basis für jede geometrische Veränderungserkennung innerhalb des zu überwachenden Erfassungsbereiches dar.

Die Vermessung der tatsächlichen Schichtdicke des die Unterflurrohrleitung bedeckenden Erdreiches kann dabei als Teilproblem der Veränderungserkennung verstanden werden. Für eine zuverlässige und aussagekräftige Messung der tatsächlichen Schichtdicke muss die dreidimensionale Auflösung des DGMs allerdings sehr exakt sein. In diesem Zusammenhang liefern photogrammetrische Verfahren zunächst nicht sehr stark dichte 3D-Punktwolken. In einem angeschlossenen Verfahrensschritt können aus solchen lückenhaften Datenstrukturen in weiterer Folge dichtere Tiefenkarten mittels "Dense Matching" generiert werden.

Zur direkten Generierung solcher Tiefenkarten aus mehreren überlappenden Bildern bzw. Bildsequenzen ("Multiview Stereo") sind aus dem Stand der Technik mehrere Methoden bekannt. Eine solche im Sinne der vorliegenden Erfindung als besonders vorteilhaft zu erachtende Methode basiert auf dem Plane-Sweep-Prinzip, siehe hierzu etwa "Plane-Sweep Algorithm: Various Tools for Computer Vision", Vincent Nozick, François de Sorbier and Hideo Saito, IEICE Technical Report, PRMU 107(539), Seiten 87-94, März 2008, "Real-Time Plane-Sweeping Stereo with Multiple Sweeping Directions", David Gallup, Jan-Michael Frahm, Philippos Mordohai, Qingxiong Yang, Marc Pollefeys, IEEE Conference on Computer Vision and Pattern Recognition, 2007, "Stereo Image Matching using Robust Estimation and Image Analysis Techniques for DEM Generation, Yihui Lu, Kubik Kurt, International Archives of Photogrammetry and Remote Sensing, 2000, and US2003/235344 A1. Beim Plane-Sweep-Prinzip wird der kontinuierliche Bereich aller möglichen Tiefenwerte quantisiert, also diskretisiert, und schrittweise für jedes (x,y)-Dupel der Tiefenkarte der wahrscheinlichste zugehörige Tiefenwert ermittelt. Dies kann beispielsweise erfolgen, indem alle möglichen quantisierten, also diskreten, Tiefenwerte hinsichtlich eines Korrelationskriteriums überprüft werden ("Photo Consistency").

Die Tiefenauflösung eines so erstellten DGMs ist somit von dem Quantisierungsintervall des Plane-Sweep-Verfahrens abhängig. Plane-Sweep-Verfahren nach dem Stand der Technik sehen üblicherweise eine Quantisierung vor, bei welcher der kontinuierliche Tiefenbereich durch eine vorgegebene Anzahl parallel zueinander verlaufender Ebenen ("Planes") diskretisiert wird. Die maximale Anzahl dieser Ebenen ist durch die Rechenleistung und/oder die Speicherkapazität einer Recheneinheit, welche die Berechnungen zur Erstellung der Tiefenkarte durchführt, begrenzt und liegt üblicherweise zwischen 200 und 300. Da die Vermessung der Schichtdicke des die Unterflurrohrleitung bedeckenden Erdreiches mit einer Genauigkeit im einstelligen Zentimeterbereich erfolgen muss und da sowohl die vorhandenen Katasterdaten der Rohrverlegung wie auch die Bestimmung der Positionen und Orientierungen der Kameras der Einzelbilder mit einer gewissen Ungenauigkeit behaftet sind, sollte der Abstand der einzelnen Ebenen etwa 1 cm betragen.

Somit kann im Rahmen von Plane-Sweep-Verfahren gemäß dem Stand der Technik gerade einmal ein Tiefenbereich von 2 bis 3 m abgedeckt werden.

### Aufgabe der Erfindung

Daher ist es eine Aufgabe der vorliegenden Erfindung ein Verfahren zur Erstellung einer Tiefenkarte von einem Erfassungsbereich der Erdoberfläche bereitzustellen, bei welchem Verfahren bei Einhaltung der vorgeschriebenen Messgenauigkeit für eine Schichtdickemessung ein wesentlich größerer Tiefenbereich abgedeckt werden kann, als dies bei gattungsgemäßen Verfahren nach dem Stand der Technik der Fall ist.

Es ist eine weitere Aufgabe der vorliegenden Erfindung, ein Verfahren zur Erstellung einer Tiefenkarte bereitzustellen, welche Tiefenkarte in weiterer Folge sowohl für eine Schichtdickemessung des eine im Erfassungsbereich angeordnete Unterflurrohrleitung bedeckenden Erdreiches, als auch für die Beurteilung anderer im Erfassungsbereich vorhandenen Szeneninhalte, wie beispielsweise Bäume, Gebäude, Fahrzeuge, Personen, etc., verwendet werden kann. Dadurch sollen Mehrfachberechnungen vermieden und eine speichereffizientere Nutzung vorhandener Daten ermöglicht werden.

### Darstellung der Erfindung

Bei dem erfindungsgemäßen Verfahren zur Erstellung einer Tiefenkarte von einem Erfassungsbereich der Erdoberfläche, in welchem Erfassungsbereich eine Unterflurrohrleitung angeordnet ist, mit den folgenden Verfahrensschritten:
- Aufnahme zumindest einer Bildsequenz mittels zumindest einer Kamera, wobei die Bildsequenz mehrere zumindest teilweise überlappende Einzelaufnahmen des Erfassungsbereiches umfasst;
- Bestimmung der zu jeder Einzelaufnahme korrespondierenden Position und Orientierung der Kamera;
wird die der Erfindung zugrunde liegende Aufgabe durch folgende weitere Verfahrensschritte gelöst:
- Bestimmung einer, vorzugsweise gemittelten, räumlichen Position und Orientierung der im Erfassungsbereich angeordneten Unterflurrohrleitung aus Referenzdaten;
- Erstellung der Tiefenkarte des Erfassungsbereiches mittels eines Plane-Sweep-Verfahrens anhand der Einzelaufnahmen und der jeweils zugehörigen Kameraposen;
- wobei der maximale Tiefenbereich des Plane-Sweep-Verfahrens mittels einer vorgegebenen Anzahl an unterschiedlich voneinander beabstandet und parallel zueinander verlaufenden Ebenen adaptiv, nämlich in Abhängigkeit von einer vorgegebenen Mindestschichtdicke für das die Unterflurrohrleitung bedeckende Erdreich, in insgesamt N Abschnitte unterteilt wird, wodurch jedem einzelnen der N Abschnitte eine vorgegebene Abschnittshöhe zugeordnet wird, und
- wobei die Orientierung der Ebenen parallel zu der Orientierung der Unterflurrohrleitung verläuft.

Das erfindungsgemäße Verfahren unterscheidet sich dabei von denen des Standes der Technik dadurch, dass der maximale Tiefenbereich, welcher bei dem Verfahren zur Erstellung der Tiefenkarte berücksichtigt werden muss, nicht homogen bzw. isometrisch quantisiert wird, sondern in Abhängigkeit von der vorgegebenen Mindestschichtdicke, welche das die Unterflurrohrleitung bedeckende Erdreich aufzuweisen hat, adaptiv in eine gewisse Anzahl von Abschnitten unterteilt wird, wobei die Abschnittshöhen der einzelnen Abschnitte unterschiedlich groß gewählt werden. Dadurch kann das Verfahren anforderungsabhängig jeweils derart adaptiert werden, dass in einem Bereich, in welchem eine genaue Vermessung vorgenommen werden muss, mit hoher Auflösung quantisiert wird, während in Bereichen, in denen keine genaue Vermessung notwendig oder von Interesse ist, eine geringe Auflösung gewählt werden kann, um die Ressourcen zur Auswertung der Tiefenkarte und zur Durchführung weiterer Berechnungen zu schonen.

Die Aufnahme der zur Erstellung der Tiefenkarte dienenden Bildsequenz geschieht erfindungsgemäß auf besonders günstige Art und Weise mittels Kameratechnik, welche auf UAVs angebracht ist, die das zu vermessende Gebiet in relativ geringer Flughöhe überfliegen. Es kann daher von einem begrenzten Krümmungsradius der Unterflurrohrleitungen in vertikaler Richtung im Erfassungsbereich ausgegangen werden, wodurch sich die Orientierung der einzelnen Ebenen parallel zu der als näherungsweise konstant angenommenen Orientierung des jeweils interessierenden Längsabschnittes der Unterflurrohrleitung anbietet.

Dabei müssen die zu jeder Einzelaufnahme korrespondierende Position und Orientierung der Kamera jeweils absolut, bezogen auf ein Weltkoordinatensystem, bestimmt werden. Auf diese Weise ist es möglich, die Position der Kamera direkt mit den zur Bestimmung der räumlichen Position und Orientierung der im Erfassungsbereich angeordneten Unterflurrohrleitung dienenden Referenzdaten zu vergleichen.

Bei einer bevorzugten Ausführungsform des erfindungsgemäßen Verfahrens ist es vorgesehen, dass die Abschnittshöhe eines im Bereich einer Grenzschicht verlaufenden Abschnittes einen minimalen Wert annimmt und die Abschnittshöhen von weiteren, insbesondere der übrigen, zu beiden Seiten der Grenzschicht angeordneten Abschnitte von der Grenzschicht aus gesehen und bezogen auf diesen minimalen Wert inkrementell zunehmen, wobei der Bereich der Grenzschicht bestimmt wird, indem von der Tiefe der Unterflurrohrleitung der Wert der Mindestschichtdicke subtrahiert wird.

Dadurch kann im Bereich der Grenzschicht mit besonders hoher Tiefenauflösung gearbeitet werden. Somit können Veränderungen, welche innerhalb einer vorgegebenen und akzeptierbaren Grenzschichtdickentoleranz liegen, besonders genau erfasst werden, während nach oben und nach unten hin die Abschnittshöhen der einzelnen Abschnitte und somit die Quantisierungsintervalle immer größer werden. Es wäre natürlich auch denkbar, dass nur bei einigen Abschnitten nahe der Grenzschicht die Abschnittshöhe immer zunimmt, während bei weiter von der Grenzschicht entfernten Abschnitten die relativ (zu den Abschnitten nahe der Grenzschicht) großen Abschnittshöhen konstant bleiben.

Durch die geringere Abschnittshöhe im Bereich der Grenzschicht ist einerseits eine hohe Auflösung der Tiefenkarte im Bereich der sehr genau zu vermessenden Grenzschicht garantiert. Gleichzeitig ist aber auch eine Abbildung aller im Erfassungsbereich vorhandenen und über die Erdoberfläche erhabenen Objekte möglich.

Voraussetzung für die Berechnung der Tiefenkarte anhand der aufgenommen Bildsequenzen ist eine genaue Bestimmung der jeweilig korrespondierenden Position und Orientierung der aufnehmenden Kamera. Erfindungsgemäß ist es daher bei einer weiteren bevorzugten Ausführungsform des Verfahrens vorgesehen, dass die Bestimmung der räumlichen Position und Orientierung der Kamera mittels globalem Navigationssatellitensystem in Verbindung mit Structure-from-Motion-Technik, visueller Odometrie, oder Inertialsensoren erfolgt.

Während der Bau- bzw. Verlegungsphase der gegenständlichen Unterflurrohrleitungen werden die Positionen und Orientierung der Unterflurrohrleitungen üblicherweise sehr exakt, also in Katastergenauigkeit (im einstelligen Zentimeterbereich) vermessen und in einem räumlichen Koordinatensystem, z. B. basierend auf einem sogenannten Weltkoordinatensystemen, vermerkt. Ein Zurückgreifen auf diese Daten ermöglicht es, die Position und Orientierung der Unterflurrohrleitungen im erfindungsgemäßen Verfahren zu verwenden. Daher ist es in einer weiteren bevorzugten Ausführungsform des Verfahrens vorgesehen, dass die Bestimmung der Orientierung der Unterflurrohrleitung mittels während der Verlegung dieser Unterflurleitung gesammelter Vermessungsdaten erfolgt.

Wird eine gemittelte räumliche Position und Orientierung der Unterflurrohrleitung verwendet, so können räumliche Position und Orientierung in jeder Einzelaufnahme durch einen Punkt und einen Vektor dargestellt werden. Die Unterflurrohrleitung wird also als Linie approximiert.

Um die auf diese Weise gewonnenen Positionen und Orientierung der Unterflurrohrleitungen direkt mit den Positionen und Orientierung der Kameras in Relation setzen zu können, ist es in einer weiteren bevorzugten Ausführungsform des Verfahrens vorgesehen, dass die Position und Orientierung der Kameras sowie die räumliche Position und Orientierung der Unterflurrohrleitung in einem gemeinsamen Koordinatensystem, beispielsweise in einem UTM-System oder in einem Gauß-Krüger-Koordinatensystem angegeben wird.

Ist die Tiefenkarte des zu vermessenden Erfassungsbereiches erst einmal erstellt und ist die Position und Orientierung der Unterflurrohrleitung in diesem Erfassungsbereich ebenso bekannt, kann durch lokalen Vergleich zueinander korrespondierender Referenzpunkte der Grenzschicht und der Unterflurrohrleitung die tatsächliche Schichtdicke des die Unterflurrohrleitung bedeckenden Erdreiches ermittelt werden. Daher ist es bei einer besonders bevorzugten Ausführungsform des Verfahrens vorgesehen, dass eine tatsächliche Schichtdicke des die Unterflurrohrleitung bedeckenden Erdreiches im Erfassungsbereich vermessen wird, indem die Tiefenkarte mit der räumlichen Position und Orientierung der Unterflurrohrleitung im Erfassungsbereich verglichen wird.

Da es sich bei dem erfindungsgemäßen Verfahren um ein Verfahren handelt, im Rahmen dessen große Datenmengen verarbeitet werden müssen, wird in der Regel eine Implementierung des Verfahrens als Computerprogramm erfolgen. Insofern betrifft die Erfindung auch ein Computerprogrammprodukt, welches ein Computerprogramm umfasst und direkt in einen Speicher einer Kamera und/oder einer der Kamera zugeordneten Recheneinheit ladbar ist, mit Computerprogramm-Mitteln, um alle Schritte des erfindungsgemäßen Verfahrens auszuführen, wenn das Computerprogramm von der Kamera und/oder der Recheneinheit ausgeführt wird.

### Kurze Beschreibung der Figuren

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben. Dabei zeigt
- Fig. 1: eine schematische Frontansicht eines Erfassungsbereiches, welcher Erfassungsbereich mittels eines Plane-Sweep-Verfahrens gemäß dem Stand der Technik vermessen wird
- Fig. 2: eine schematische Frontansicht eines Erfassungsbereiches, welcher Erfassungsbereich mittels eines erfindungsgemäßen Plane-Sweep-Verfahrens vermessen wird

### Wege zur Ausführung der Erfindung

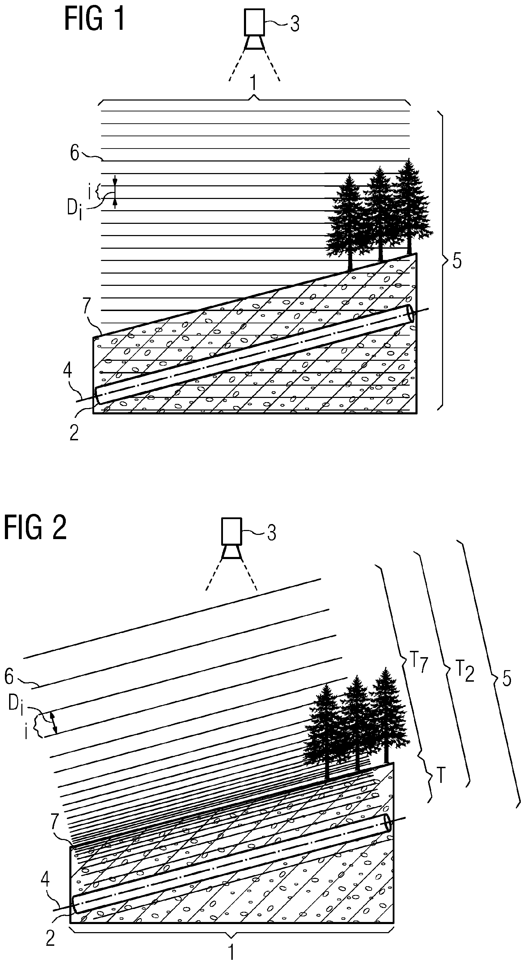

Fig. 1 zeigt eine schematische Ansicht eines Erfassungsbereiches 1 der Erdoberfläche. Unterhalb einer Grenzschicht 7, welche zwischen Erdreich und Atmosphäre verläuft und somit einen Abschnitt der Erdoberfläche darstellt, ist eine Unterflurrohrleitung 2 mit einer bestimmten räumlichen Orientierung 4 angeordnet. Oberhalb der Grenzschicht 7 befinden sich einige erhabene, in konkreten Fall in Form von Bäumen dargestellte, Objekte.

Eine Kamera 3 nimmt gerade ein Bild des Erfassungsbereiches 1 auf, wobei die Kamera 3 an einem den Erfassungsbereich in einer bestimmten Höhe überfliegenden UAV angebracht und zur Erdoberfläche gerichtet ist. Das Plane-Sweep-Verfahren gemäß dem Stand der Technik, welches anhand von Fig. 1 skizziert ist, unterteilt nun einen Tiefenbereich 5, welcher sich ausgehend von der Kamera 3 in Richtung Erdoberfläche erstreckt, mittels einer vorgegebenen Anzahl von Ebenen 6 gleichmäßig in äquidistante Abschnitte i. Um Unregelmäßigkeiten im Höhenverlauf der Grenzschicht 7 hinreichend erfassen zu können, muss sich dieser Tiefenbereich 5 weiter als lediglich von der Kamera 3 bis zur Grenzschicht 7 erstrecken. Er sollte daher zumindest bis in den Tiefenbereich der Unterflurrohrleitung 2 reichen. Die Ebenen 6, mittels derer der Tiefenbereich 5 quantisiert ist, verlaufen parallel zueinander, jedoch nicht parallel zur Orientierung 4 der Unterflurrohrleitung 2 bzw. parallel zur Grenzschicht 7.

Die Anzahl der zur Quantisierung des Tiefenbereiches 5 zur Verfügung stehenden Abschnitte i ist einerseits durch die Rechenleistung einer Auswertungseinheit, welche die Berechnungen zur Erstellung der Tiefenkarte durchführt, und andererseits auch durch den vorhandenen Speicherplatz dieser Auswertungseinheit beschränkt und liegt üblicherweise im Bereich zwischen 200 und 300. Aufgrund der Genauigkeit, mit welcher die Tiefenkarte des Erfassungsbereiches 1 erstellt werden muss, sollte eine Abschnittshöhe Dᵢ der einzelnen Abschnitte i im unteren einstelligen Zentimeterbereich liegen. Beträgt die Abschnittshöhe Dᵢ beispielsweise 1 cm, so kann lediglich ein Tiefenbereich 5 von 2 m abgedeckt werden. Über die Grenzschicht 7 erhabene Gegenstände, wie etwa Bäume oder Gebäude, können diesen Bereich von 2 m jedoch bei weitem überschreiten. Zudem können selbst Steigungen oder Gefälle des Terrains diesen Tiefenbereich überschreiten.

Fig. 2 hingegen skizziert das erfindungsgemäße Verfahren zur Erstellung einer Tiefenkarte des Erfassungsbereiches 1. Der Erfassungsbereich 5 wird dabei ebenfalls mittels der Ebenen 6 in Abschnitte i unterteilt. Allerdings verlaufen die Ebenen 6 einerseits parallel zur Orientierung 4 der Unterflurrohrleitung 2, andererseits sind die Abschnittshöhen Dᵢ der einzelnen Abschnitte i nicht konstant.

Die Orientierung der Ebenen 6 sowie die Wahl der Abschnittshöhen Dᵢ erfolgt im erfindungsgemäßen Plane-Sweep-Verfahren derart, dass zunächst die Position und räumlichen Orientierung 4 der Unterflurrohrleitung 2 aus Referenzdaten, im konkreten Ausführungsbeispiel aus Katasterdaten der Bauphase, bestimmt wird. Von der derart ermittelten Tiefe T₂ der Rohrleitung 2 wird - von der Kamera 3 aus betrachtet - nun die gesetzlich vorgegebene Mindestschichtdicke T subtrahiert, um die Tiefe T₇ - und somit den Bereich - der Grenzschicht 7 relativ zum Ursprung des Tiefenbereiches 5 abzuschätzen.

In diesem Bereich wird nun einem parallel zur räumlichen Orientierung 4 der Unterflurrohrleitung 2 verlaufenden Abschnitt i eine minimale Abschnittshöhe Dᵢ zugeordnet. Die Abschnittshöhen Dᵢ aller anderen, oberhalb und unterhalb dieses im Bereich der Grenzschicht 7 angeordneten Abschnittes i verlaufenden Abschnitte i nehmen von der Grenzschicht 7 aus betrachtet inkrementell zu. Somit kann im Bereich der Grenzschicht 7, insbesondere im Bereich der zulässigen Toleranzwerte für die Schichtdicke des die Unterflurrohrleitung bedeckenden Erdreiches, eine sehr detaillierte Tiefenkarte mit hoher Tiefenauflösung erstellt werden. Der Tiefenbereich 5 kann dabei erheblich größer sein, als bei gattungsgemäßen Verfahren nach dem Stand der Technik, da eine besonders kleine Abschnittshöhe Dᵢ - und somit eine hohe Genauigkeit der Tiefenkarte - lediglich im Bereich der Grenzschicht 7 vorliegen muss und die Abschnittshöhen Dᵢ der restlichen Abschnitte mitunter deutlich größer als diese minimale Abschnittshöhe Dᵢ sind.

### Bezugszeichenliste

- 1: Erfassungsbereich
- 2: Unterflurrohrleitung
- 3: Kamera
- 4: Orientierung der Unterflurrohrleitung
- 5: Tiefenbereich
- 6: Ebenen des Plane-Sweep-Verfahrens
- 7: Grenzschicht
- i: Abschnitt
- Dᵢ: Abschnittshöhe
- T: Mindestschichtdicke für das die Unterflurrohrleitung bedeckende Erdreich
- T₂: Tiefe der Unterflurrohrleitung
- T₇: Tiefe des Bereiches der Grenzschicht

## Patentansprüche

1. Verfahren zur Erstellung einer Tiefenkarte von einem Erfassungsbereich (1) der Erdoberfläche, in welchem Erfassungsbereich (1) eine Unterflurrohrleitung (2) angeordnet ist, mit den folgenden Verfahrensschritten:
- Aufnahme zumindest einer Bildsequenz mittels zumindest einer Kamera (3), wobei die Bildsequenz mehrere zumindest teilweise überlappende Einzelaufnahmen des Erfassungsbereiches (1) umfasst;
- Bestimmung der zu jeder Einzelaufnahme korrespondierenden Position und Orientierung der Kamera;
**gekennzeichnet durch**
- Bestimmung einer, vorzugsweise gemittelten, räumlichen Position und Orientierung (4) der im Erfassungsbereich (1) angeordneten Unterflurrohrleitung (2) aus Referenzdaten;
- Erstellung der Tiefenkarte des Erfassungsbereiches (1) mittels eines Plane-Sweep-Verfahrens anhand der Einzelaufnahmen und der jeweils zugehörigen Kameraposen;
- wobei der maximale Tiefenbereich (5) des Plane-Sweep-Verfahrens mittels einer vorgegebenen Anzahl an unterschiedlich voneinander beabstandet und parallel zueinander verlaufenden Ebenen (6) adaptiv, nämlich in Abhängigkeit von einer vorgegebenen Mindestschichtdicke (T) für das die Unterflurrohrleitung (2) bedeckende Erdreich, in insgesamt N Abschnitte (i) unterteilt wird, wodurch jedem einzelnen der N Abschnitte (i) eine vorgegebene Abschnittshöhe (Dᵢ)zugeordnet wird, und
- wobei die Orientierung der Ebenen (6) parallel zu der Orientierung (4) der Unterflurrohrleitung (2) verläuft.

2. Verfahren nach Anspruch 1, **dadurch gekennzeichnet, dass** die Abschnittshöhe (Dᵢ) eines im Bereich einer Grenzschicht (7) verlaufenden Abschnittes (i) einen minimalen Wert annimmt und die Abschnittshöhen (Dᵢ) von weiteren, insbesondere der übrigen, zu beiden Seiten der Grenzschicht (7) angeordneten Abschnitte (i) von der Grenzschicht (7) aus gesehen und bezogen auf diesen minimalen Wert inkrementell zunehmen, wobei der Bereich der Grenzschicht (7) bestimmt wird, indem von der Tiefe (T₂) der Unterflurrohrleitung (2) der Wert der Mindestschichtdicke (T) subtrahiert wird.

3. Verfahren nach Anspruch 1 oder 2, **dadurch gekennzeichnet, dass** die Bestimmung der räumlichen Position und Orientierung der Kamera (3) mittels globalem Navigationssatellitensystem in Verbindung mit Structure-from-Motion-Technik, visueller Odometrie, oder Inertialsensoren erfolgt.

4. Verfahren nach einem der Ansprüche 1 bis 3, **dadurch gekennzeichnet, dass** die Bestimmung der Orientierung (4) der Unterflurrohrleitung (2) mittels während der Verlegung dieser Unterflurleitung (2) gesammelter Vermessungsdaten erfolgt.

5. Verfahren nach einem der Ansprüche 1 bis 4, **dadurch gekennzeichnet, dass** eine gemittelte räumliche Position und Orientierung (4) der Unterflurrohrleitung (2) in jeder Einzelaufnahme durch einen Punkt und einen Vektor dargestellt wird.

6. Verfahren nach einem der Ansprüche 1 bis 5, **dadurch gekennzeichnet, dass** die Position und Orientierung der Kameras (3) sowie die räumliche Position und Orientierung der Unterflurrohrleitung (2) in einem gemeinsamen Koordinatensystem, beispielsweise in einem UTM-System oder in einem Gauß-Krüger-Koordinatensystem angegeben wird.

7. Verfahren nach einem der vorhergehenden Ansprüche, **dadurch gekennzeichnet, dass** eine tatsächliche Schichtdicke des die Unterflurrohrleitung (2) bedeckenden Erdreiches im Erfassungsbereich (1) vermessen wird, indem die Tiefenkarte mit der räumlichen Position und Orientierung der Unterflurrohrleitung (2) im Erfassungsbereich (1) verglichen wird.

8. Computerprogrammprodukt, welches ein Computerprogramm umfasst und direkt in einen Speicher einer Kamera und/oder einer der Kamera zugeordneten Recheneinheit ladbar ist, mit Computerprogramm-Mitteln, um alle Schritte des Verfahrens nach einem der Ansprüche 1 bis 7 auszuführen, wenn das Computerprogramm von der Kamera und/oder der Recheneinheit ausgeführt wird.

## Claims

1. Method for compiling a depth map of an acquisition zone (1) of the earth's surface, an underground pipeline (2) being arranged in said acquisition zone (1) and the method having the following method steps:
- capturing at least one image sequence using at least one camera (3), wherein the image sequence comprises a plurality of at least partly overlapping individual captures of the acquisition zone (1);
- determining the position and orientation of the camera corresponding to each individual capture;
**characterised by**
- determining a preferably averaged spatial position and orientation (4) of the underground pipeline (2) arranged in the acquisition zone (1) from reference data;
- compiling the depth map of the acquisition zone (1) using a plane-sweep method on the basis of the individual captures and the respectively associated camera poses;
- wherein the maximum depth range (5) of the plane-sweep method is subdivided adaptively, namely as a function of a predetermined minimum layer thickness (T) for the soil covering the underground pipeline (2), into a total of N portions (i), by means of a predetermined number of planes (6) spaced differently from one another and extending parallel to one another, whereby a predetermined portion height (Dᵢ) is assigned to each individual one of the N portions (i), and
- wherein the orientation of the planes (6) extends parallel to the orientation (4) of the underground pipeline (2).

2. Method according to claim 1, **characterised in that** the portion height (Dᵢ) of a portion (i) extending in the region of a boundary layer (7) assumes a minimum value and the portion heights (Dᵢ) of further, in particular the remaining, portions (i) arranged either side of the boundary layer (7) increase from the boundary layer (7) incrementally on the basis of this minimum value, wherein the region of the boundary layer (7) is determined by subtracting the value of the minimum layer thickness (T) from the depth (T₂) of the underground pipeline (2).

3. Method according to claim 1 or 2, **characterised in that** the spatial position and orientation of the camera (3) is determined by means of a global navigation satellite system in conjunction with structure-from-motion techniques, visual odometry or inertial sensors.

4. Method according to one of claims 1 to 3, **characterised in that** the orientation (4) of the underground pipeline (2) is determined by means of measurement data collected while this underground pipeline (2) is being laid.

5. Method according to one of claims 1 to 4, **characterised in that** an averaged spatial position and orientation (4) of the underground pipeline (2) is represented in each individual capture by one point and one vector.

6. Method according to one of claims 1 to 5, **characterised in that** the position and orientation of the cameras (3) and the spatial position and orientation of the underground pipeline (2) is indicated in a common coordinate system, for example in a UTM system or in a Gauß-Krüger coordinate system.

7. Method according to one of the preceding claims, **characterised in that** an actual layer thickness of the soil covering the underground pipeline (2) is measured in the acquisition zone (1) by comparing the depth map with the spatial position and orientation of the underground pipeline (2) in the acquisition zone (1).

8. Computer program product which comprises a computer program and may be loaded directly into a memory of a camera and/or a computing unit assigned to the camera, with computer program means for performing all the steps of the method according to one of claims 1 to 7 when the computer program is run by the camera and/or the computing unit.

## Revendications

1. Procédé destiné à l'élaboration d'une carte de profondeur par une zone de détection (1) de la surface de la terre, zone de détection (1) dans laquelle est disposée une conduite enterrée (2), avec les étapes de procédé suivantes :
- enregistrement d'au moins une séquence d'images au moyen d'au moins une caméra (3), dans lequel la séquence d'images comprend plusieurs enregistrements de la zone de détection (1) se chevauchant au moins partiellement ;
- détermination de la position et de l'orientation de la caméra correspondant à chaque enregistrement individuel ;
**caractérisé par**
- la détermination d'une position et d'une orientation dans l'espace (4), de préférence moyennées, de la conduite enterrée (2) disposée dans la zone de détection (1) à partir de données de référence ;
- l'élaboration de la carte de profondeur de la zone de détection (1) au moyen d'un procédé de balayage de plan à l'aide des enregistrements individuels et de chacune des positions de caméra correspondantes ;
- dans lequel la zone de profondeur maximale (5) du procédé de balayage de plan est divisée de manière adaptative au moyen d'un nombre prédéfini de plans (6) s'étendant à une distance différente les uns des autres et s'étendant parallèlement les uns aux autres, à savoir en fonction d'une épaisseur de couche minimale (T) prédéfinie pour la terre recouvrant la conduite enterrée (2), au total en N sections (i), moyennant quoi une hauteur de section prédéfinie (Dᵢ) est associée à chacune des N sections (i), et
- dans lequel l'orientation des plans (6) s'étend parallèlement à l'orientation (4) de la conduite enterrée (2).

2. Procédé selon la revendication 1, **caractérisé en ce que** la hauteur de section (Dᵢ) d'une section (i) s'étendant dans la zone d'une couche limite (7) adopte une valeur minimale et les hauteurs de section (Dᵢ) d'autres, en particulier celles qui restent, sections (i) disposées des deux côtés de la couche limite (7) vues depuis la couche limite (7) et par rapport à cette valeur minimale progressent de manière incrémentielle, dans lequel la zone de la couche limite (7) est déterminée en retranchant la valeur de l'épaisseur de couche minimale (T) de la profondeur (T₂) de la conduite enterrée (2) .

3. Procédé selon la revendication 1 ou 2, **caractérisé en ce que** la détermination de la position et de l'orientation dans l'espace de la caméra (3) est effectuée au moyen d'un système mondial de navigation par satellite connecté à une technique de structure à partir du mouvement, d'une odométrie visuelle ou de capteurs à inertie.

4. Procédé selon la revendication 1 à 3, **caractérisé en ce que** la détermination de l'orientation (4) de la conduite enterrée (2) est effectuée au moyen de données de mesure recueillies pendant la pose de cette conduite enterrée (2) .

5. Procédé selon l'une des revendications 1 à 4, **caractérisé en ce qu'**une position et une orientation dans l'espace (4) moyennées de la conduite enterrée (2) sont représentées dans chaque enregistrement individuel par le biais d'un point et d'un vecteur.

6. Procédé selon l'une des revendications 1 à 5, **caractérisé en ce que** la position et l'orientation de la caméra (3) ainsi que la position et l'orientation dans l'espace de la conduite enterrée (2) sont indiquées dans un système commun de coordonnées, par exemple dans un système UTM ou dans un système de coordonnées Gauß-Krüger.

7. Procédé selon l'une des revendications précédentes, **caractérisé en ce qu'**une épaisseur de couche effective de la terre recouvrant la conduite enterrée (2) dans la zone de détection (1) est mesurée en comparant la carte de profondeur avec la position et l'orientation dans l'espace de la conduite enterrée (2) dans la zone de détection (1).

8. Produit de programme informatique, lequel comprend un programme informatique et est chargeable directement dans une mémoire d'une caméra et/ou d'une unité de traitement associée à la caméra, avec des moyens de programme informatique pour exécuter toutes les étapes du procédé selon l'une des revendications 1 à 7 lorsque le programme informatique est exécuté par la caméra et/ou l'unité de traitement.
